# EUROPEAN PATENT SPECIFICATION

(11) **EP 1 366 355 B1**
(45) Date of publication and mention of the grant of the patent: **30.07.2014**
(21) Application number: 02702537.8
(22) Date of filing: 08.03.2002
(51) Int. Cl.: G01N 27/404

(54) **Method of manufacturing an electrochemical gas sensor**
Verfahren zur Herstellung eines elektrochemischen Gassensors
Procédé de fabrication d'un capteur électrochimique

(30) Priority: 09.03.2001 GB 0105848
(43) Date of publication of application: 03.12.2003
(73) Proprietor: Honeywell Analytics Limited, Bracknell Berkshire RG12 1EB (GB)
(72) Inventor: MOLE, Terrence, James,, Dorset, DT11 9QB (GB)
(74) Representative: Copsey, Timothy Graham
(86) International application number: PCT/GB2002/000967
(87) International publication number: WO 2002/073177

(56) References cited:
- EP-A- 0 298 570
- EP-A- 0 496 527
- EP-A- 0 721 583
- DE-A- 19 755 506
- GB-A- 2 292 804
- GB-A- 2 299 863
- US-A- 4 406 770
- US-A- 4 673 455
- US-A- 4 766 346
- US-A- 5 338 429
- US-A- 5 346 606
- US-A- 5 546 787
- US-A- 5 830 337
- US-A- 5 997 706
- PATENT ABSTRACTS OF JAPAN vol. 016, no. 096 (P-1322), 10 March 1992 (1992-03-10) & JP 03 274026 A (SEIKO EPSON CORP), 5 December 1991 (1991-12-05)
- PATENT ABSTRACTS OF JAPAN vol. 010, no. 313 (E-448), 24 October 1986 (1986-10-24) & JP 61 125028 A (HITACHI LTD), 12 June 1986 (1986-06-12)

## Description

### Field of Invention

The present invention relates to the manufacture of electrochemical gas sensors; the term "gas" used in the present specification is intended to cover both gases and vapours.

### Background Art

Electrochemical gas sensors are well known for sensing the presence of a variety of gases. Typically, such electrochemical gas sensors comprise a sensing electrode at which the gas concerned is oxidised or reduced, and a counter electrode. The sensing and counter electrodes are separated by a porous body containing an electrolyte. Such sensors also contain a mechanism for limiting the access of gas to the sensing electrodes so that the amount of gas reaching the sensing electrode is proportional to the amount of gas in the atmosphere being sensed. Such gas is oxidised or reduced on the sensing electrode causing a current to flow in an external electrical circuit. The current flowing through that circuit is proportional to the amount of gas oxidised or reduced at the sensing electrode, which in turn is directly proportional to the amount of gas in the external atmosphere being monitored. Thus, the current provides a direct measure of the amount of gas in the atmosphere being monitored by the sensor.

In addition to a sensing and counter electrode, the sensor may include a reference electrode, through which no current flows. The reference electrode holds the potential of the sensing electrode within a fixed potential range, thereby improving the accuracy of the sensor.

Electrolyte can evaporate through the sensing electrode, thereby causing the sensor to dry out and cease operating. Accordingly, it has been suggested (see GB 2094005) to provide a reservoir of electrolyte and a wick one end of which is in contact with the reservoir and the other end is in contact with the separator between the sensing and the counter electrodes. The wick draws electrolyte from the reservoir into the separator when the separator is dry and so prevents the sensor from drying out completely. The above Patent suggests making the wick and separator from either borosilicate glass fibre filter mats or polyester fibre.
US5338429 and US5830337 both disclose this type of electrochemical gas sensor but also having contacting pins which extend through the housing and connect the inside and the outside of the housing.
GB2299863 discloses an electrochemical gas sensor cell where an electrode lead passes through a groove-like annular chamber formed by a housing and cover, the chamber being filled with a resin in order to seal the cell.

Electrochemical gas sensors using ionically conductive electrolytes, such as acidic electrolytes, for example sulphuric acid can absorb and lose water, depending upon external environmental conditions such as humidity and temperature. Indeed, at high humidities, the volume of the electrolyte can be so great that it causes the sensor to leak. Therefore account needs to be taken, in the sensor design, of the maximum possible increase in volume for electrolyte expansion, to hence prevent leakage of electrolyte from the sensor. Accordingly a large proportion of the sensor is taken up in the form of an electrolyte reservoir.

### Disclosure of the Invention

### A method according to claim 1.

There is provided an electrochemical gas sensor which is not part of the invention comprising:
(a) a sensing electrode;
(b) a counter electrode;
(c) a separator containing an electrolyte which is located between, and in contact with, the sensing electrode and the counter electrode, which separator is made of a material having a capillary action capable of drawing electrolyte in contact with the separator into the separator;
(d) a reservoir comprising an electrolyte and a wicking material having a capillary action that is capable of drawing up electrolyte and passing it from the reservoir to the separator;

The improvement lies in making the capillary action of the separator stronger than the corresponding capillary action of the wick material.

The greater capillary action of the separator over the wick will mean that, when the amount of electrolyte in the sensor has fallen to a low level or if for any reason, e.g. the orientation of the sensor, the base of the wick is not in contact with any electrolyte, the wick will not pull electrolyte from the separator (or at least would not pull electrolyte to the same extent that it would if the separator and the wick material had the same capillary action). Thus the separator will preferentially retain electrolyte as against the wick material and the sensor will continue to maintain adequate ionic conductivity between electrodes to operate. In addition, if the separator becomes oversaturated with electrolyte, e.g. because the electrolyte has absorbed excessive water because of the high relative humidity in the atmosphere being monitored, the wick still has sufficiently great capillary action to drain the separator.

The relative volume of the wick as compared to the volume of the separator is preferably made as great as possible. As the electrolyte is preferentially retained within the separator, rather than throughout the sensor, good ionic conductivity is retained between the electrodes with the minimal amount of electrolyte. The sensor. therefore exhibits good performance in low humidity environments. Traditionally this has been achieved via the use of larger volumes of electrolyte. This permits a reduction in sensor size as less electrolyte is needed to keep the sensor operational and hence less reservoir space is now needed to accommodate any increase in electrolyte volume under high humidity conditions. Much greater capacity to accommodate increased electrolyte volume in high humidity environments is provided, at the same sensor size. The ability of the sensor to tolerate high relative humidity without leaking due to pressure build-up within the sensor, caused by water absorption, is thus much improved for a given size of sensor.

Both the separator and the wick will generally be made of a mat of hydrophilic fibres (although other bodies having a capillary action may be used) and the wick and the separator may be made of the same or different materials. If made of the same materials, the increased capillary action of the separator can be achieved by suitably adjusting the space in between the fibres in the separator and the wick. The differential size of the gaps between the fibres in the separator and the wick will generally be achieved by making the separator from finer fibres than the wick. It is also possible to achieve increased wicking action by compressing the separator to maximise the capillary action of the separator fibres but such an arrangement is difficult to achieve on a uniform and consistent basis and accordingly it is preferable to make the separator out of finer filaments than the wick if they are both made out of the same basic fibre material. As well as fibrous materials, both the separator and wick can also be made of other materials having similar effective pore sizes, or a similar ratio of effective pore size between the separator and the wick. Cast, sintered, moulded or compressed polymer, metallic or ceramic materials can be used that contain the desired effective pore size and that are inert to the electrolyte and that possess appropriate capillary action for the electrolyte. Certain materials that are inherently hydrophobic, especially polymer materials, may require further treatment, e.g. by corona or plasma discharge, to make them suitably hydrophilic. Where highly reactive electrolyte is used I a sensor, the range of separator and wick materials is limited and they tend to be more expensive and so less desirable. Consideration also needs to be taken of both the rigidity and resilience of the separator and wick materials. The higher the rigidity and lower the resilience then the tighter the dimensional tolerance required in the sensor manufacture. The use of pre-shaped separator and wick components that can be inserted into a sensor without additional manipulation during manufacture is especially advantageous economically in high volume sensor manufacture. Indeed the use of such pre-shaped separator and wick components is advantageous whether or not the differential capillary action between the separator and the wick, as described above, is used in the sensor.

The capillary action of a material can be measured easily by placing the material in electrolyte and measuring the height that the electrolyte will rise in the material. It is important to conduct this test with the material in the same orientation that electrolyte is drawn through the material in the sensor itself. The wick material in particular may well have a different capillary action in one direction than in a different direction.

Both the separator and the wick material should have a substantial capillary action but the height of the electrolyte in the above test should preferably be at least 25% higher for the separator than for the wick material, more preferably at least 50% greater. If the separator and the wick material have the same basic composition, it is preferred that the diameter of the pores in the wick is at least 1.5 times greater than, e.g. more than twice, the pore diameter in the separator.

The wick should extend over substantially the whole of the volume of the reservoir so that it is still in contact with electrolyte irrespective of the orientation of the sensor.

### Brief Description of the Drawings

There will now be described, by way of example only a gas sensor by reference to the accompanying drawings, the sensor not being part of the invention.
Figure 1 is a plan view of the separator for use in a sensor;
Figure 2 is a plan view of the wick for use in a sensor;
Figure 3 is an exploded view of a sensor;
Figure 4 is an exploded view of another sensor;
Figure 5 is an exploded view of a third sensor and
Figure 6 is a plan and sectional view of a wicking body for use in a sensor.

### Detailed Description of the Preferred Embodiment

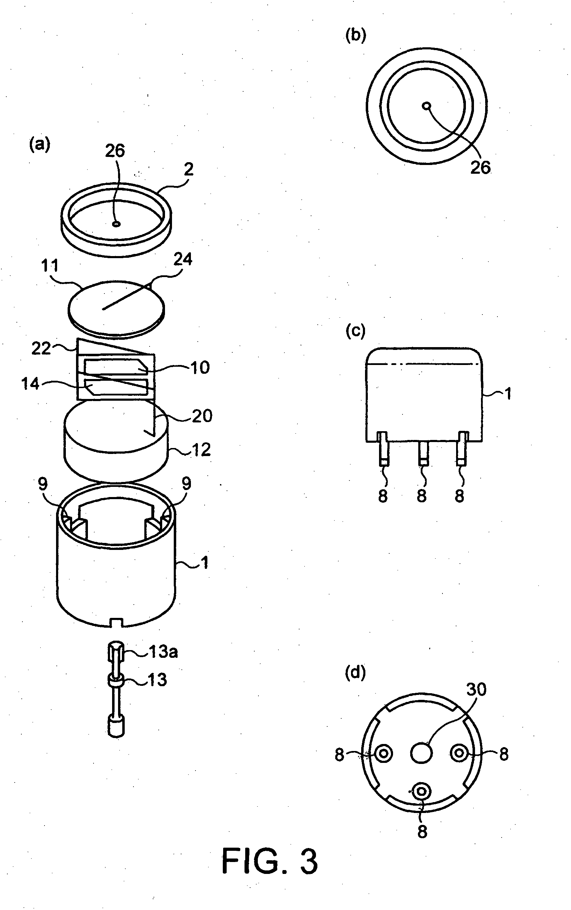

Referring initially to Figure 3, the sensor, which is designed to detect carbon monoxide, has a rigid moulded plastic housing 1, the bottom of which includes (as is well known) several brass contact pins 8 extending through the housing wall for providing connection to an external circuit. The pins may be insert moulded into the base of the housing during the moulding of the housing. Since the arrangement of the contacts is well known and is not relevant to the present invention, it will not be described further. Current collector wires 20, 22, 24 are welded to the contact pins on the inside of the housing. The bottom of the wires and the contact pins are isolated by applying a potting compound, e.g. epoxy resin, to them so that they do not come into contact with the acidic electrolyte, which corrodes the pins. Although the wires are made of platinum and do not themselves corrode in the electrolyte, it is important that the base of each wire is also isolated to prevent the electrolyte seeping along the wires to the pins. Further details of the method of applying the potting compound are given later.

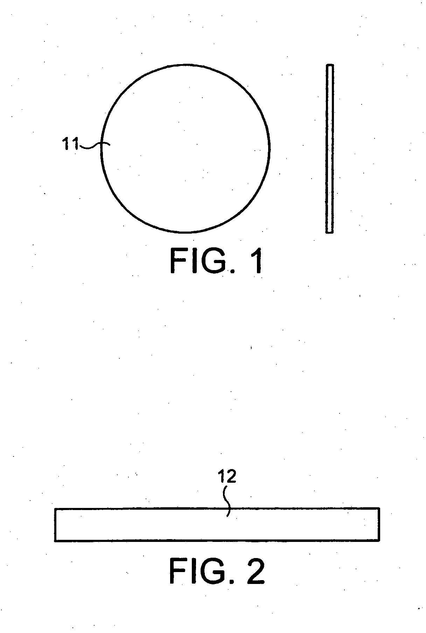

A strip 12 (see Figure 2) of material formed as a mat of unbound borosilicate glass fibres (BS2000 glass fibre having a mean pore size of 4.8 µm) is wound up to form a helix (see Figure 3) which is placed within the housing. The majority of the fibres in the mat extend across the width of the strip, which means that they extend vertically when rolled up into the helix shown in Figure 3.

A counter electrode 10 and a reference electrode 14 are placed on the helically wound strip 12. Each electrode is formed by bonding a mixture of polytetrafluoroethylene (PTFE) and powdered platinum (platinum black) onto a microporous PTFE backing layer (such electrodes and their method of manufacture are well-known). The two electrodes could be provided on a common PTFE layer instead of on separate layers, as shown. Reference and counter electrode wires 20 and 22 are bent over so that they are in electrical contact with the upper sides of the two electrodes, which is the side coated with platinum black, to provide electrical contact between the electrodes and the pins 8. Other catalyst materials may be used (depending on the nature of the gas being detected); such catalysts will generally be noble metals or alloys or mixtures thereof.

A separator 11 (see Figure 1) is placed on top of the reference and counter electrodes and associated wires 20 and 22. The separator is a mat made of unbound borosilicate glass fibres (e.g. such as that supplied by Whatman International Limited, grade GF/A and having a mean pore size of 1.9µ); the separator has a diameter that is approximately the same as the diameter of the housing.

A top cap 2 made of the same material as the housing is the last component of the sensor. It has a sensing (or working) electrode (not shown) welded to its underside. The construction of the sensing electrode is the same as that of the reference/counter electrodes described above but the electrochemically active platinum layer is located on the underneath of the PTFE layer, i.e. it faces the separator. A wire 24 is in electrical contact with the underside of the sensing electrode.

The top cap 2 also includes a hole 26 that allows gas from the atmosphere being monitored to enter the sensor. The top cap 2 is welded onto the housing 1 to form a liquid-tight seal. The thickness of the internal components of the sensor is greater than the height of the housing 1 so that all the components are compressed when the top cap is welded in place. This keeps the components in tight engagement with each other and prevents them slipping around within the housing, The helically wound strip 12 is especially important to achieve this compression. As mentioned above, the majority of the fibres in the strip 12 run across the width of the strip shown in Figure 2, which means that they extend from top to bottom of the helical winding. When the cap is fitted these fibres can bow, thereby allowing room for other components of the sensor. Because the fibres are resilient, they also keep the other components compressed within the housing for the lifetime of the sensor.

The base of the housing includes a hole 30 (see Figure 3d) with inwardly tapering side walls. After the cap has been fixed to the housing, electrolyte is fed into the bottom of the sensor. The hole 30 is closed by fusing a plug 13a with a taper corresponding to that of the hole 30 in place after the electrolyte has been injected. The plug 13a is formed in the centre of a sprue 13 and closure is achieved by inserting the plug end 13a into the hole and fusing it in place, e.g. by heat. The sprue 13 is then snapped off.

The electrolyte is wicked up the helically wound strip 12. Because the reference and counter electrodes 10, 14 are smaller than both the separator 11 and the helically wound strip 12, the outer edge portions of the separator 11 and the helically wound strip 12 are in direct contact with each other and so electrolyte is wicked up by the strip 12 into the separator around the edges of the electrodes 10 and 14 and is drawn by capillary action throughout the separator 11, thereby maintaining the electrochemically active layers of the electrodes in contact with the electrolyte. Such electrolyte may, for instance, be concentrated sulphuric acid (5 molar), which absorbs moisture, thereby increasing the quantity of liquid in the sensing electrode 11. The fibres of the separator 11 are finer than those of the strip 12 and so the spacing between the fibres in the separator is narrower than the fibres of the strip 12 and so the separator exerts a stronger capillary effect than the strip. As the electrolyte is preferentially retained within the separator, rather than throughout the sensor, good ionic conductivity is maintained between the electrodes with the minimal amount of electrolyte. The capillary action of the wick although lower than that of the separator is still sufficiently high that it can efficiently drain excess electrolyte from the separator when it has built by the effect of water absorption in high humidity environments. The sensor needs less electrolyte to keep it working than prior art sensors since the electrolyte preferentially migrates to the separator due to its high capilliarity. Thus the amount of electrolyte filled into the sensor is generally lower than in prior art sensors and so the capacity of the sensor to absorb water is greatly increased (for a given size of sensor) before hydraulic pressure is built up against the porous PTFE sensing electrode, which is sealed into the cap. This is highly beneficial since that pressure build-up can cause the sensing electrode to burst and electrolyte to leak from the sensor.

According to the invention, the wires 20, 22 and 24 are welded to their respective contact pins 8 and encapsulated in potting compound. Prior to the addition of the potting compound, the wires are held in separate grooves 9 in the side wall of the housing 1; the grooves have a width of 0.2 - 1.2 mm, e.g. 0.4 - 0.9.mm and preferably about 0.8 mm, which means that when the liquid potting compound is added to the housing, it is drawn up the grove by capillary action and then sets, thereby also encapsulating the ends of the wires attached to the pins. Not only does such an arrangement encapsulate the lower ends of the wires (thereby making it less likely that electrolyte will reach the pins 8) but also the grooves 9 act as a "jig" for holding the wires during the operation of welding the wires to the pins. The grooves also keep the wires in place against the housing wall while the other components are inserted into the housing and so facilitate such insertion and also facilitate the subsequent bending over of the wires to contact the relevant electrode. Therefore the grooves allow increased automation of the manufacture of the cells.

The potting compound used is preferably an epoxy/amino resin, e.g. Resin DP270 (obtainable from 3M Adhesives Division of 3M Center, Building 220-7E-05, St Paul, MN, United States of America), which is a two part formulation which must be mixed prior to use. Obviously, the viscosity of the resin must be such that it can be drawn up the grooves; if it is too viscous at room temperature, the housing and the potting compound may be heated, e.g. to 80-100°C. Elevated temperature also accelerates curing, which occurs in about 30 minutes at 100°C.

It is not desirable that the potting compound should extend to the top of the housing wall and so, about to thirds of the height of the wall, the width of the grooves 9 is increased so that it is no longer able to exert a capillary force on the potting compound and so the potting compound does not rise above the narrow section of the groove.

The operation of the sensor which is not part of the invention will be briefly described for a carbon monoxide sensor but is applicable to sensors for detecting other gases.

Carbon monoxide migrates through the hole 26 in the top cap 1 at a rate proportional to the concentration of that gas in the atmosphere being monitored. It migrates through the pores of the PTFE layer of the sensing electrode and is oxidised at the platinum catalyst of the sensing electrode. This causes a current to flow through an external circuit of known design and across the electrolyte in the separator; the magnitude of the current depends on the amount of carbon monoxide oxidised and that in turn depends on the amount of carbon monoxide in the atmosphere being monitored. Thus the magnitude of the current in the external circuit gives a measure of the amount of carbon monoxide in the atmosphere.

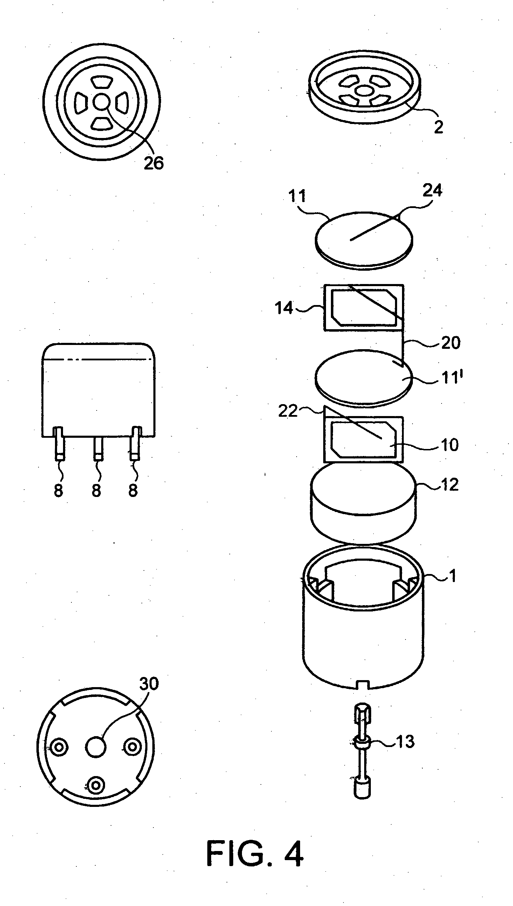

The sensor of Figure 4 is identical to that of Figure.3 except that the reference electrode 14 and the counter electrode 12 are not co-planar but are instead separated by a separator 11' of identical composition to separator 11. Both electrodes are of smaller area than the separators 11 and 11' and so electrolyte is fed from the reservoir around the outside of the electrodes by capillary action of the strip 12 into (or out of) the separators 11 and 11' and is evenly distributed within the separators again by the capillary action of the separators.

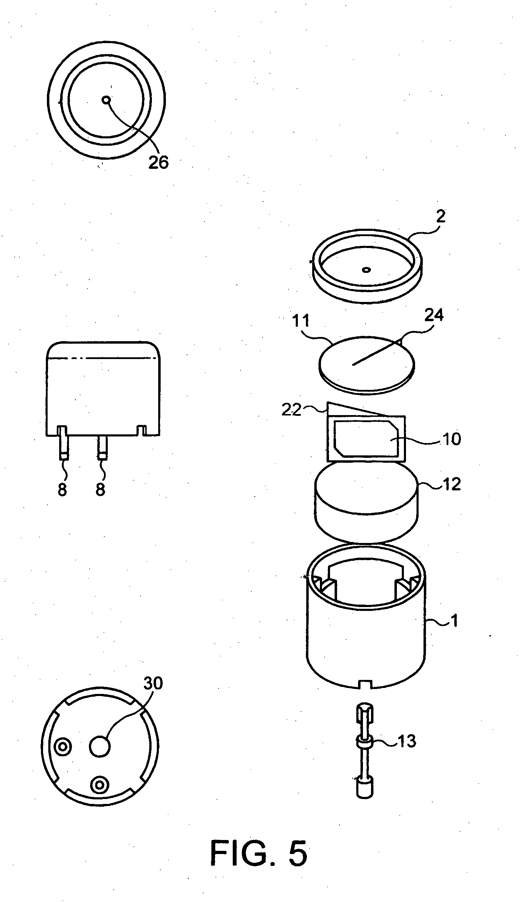

The sensor of Figure 5 is identical to that of Figure 3 except that no reference electrode is provided.

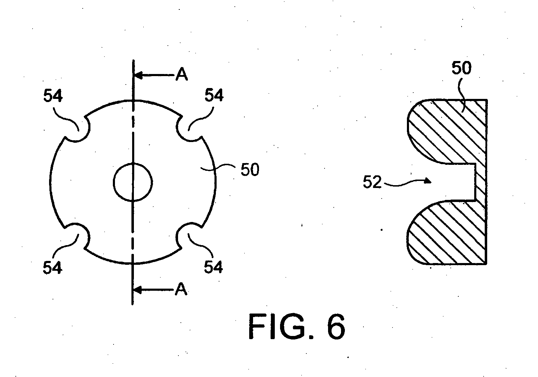

As shown in Figure 6, the strip 12 can be replaced by a body 50 having capillary pores that wick electrolyte to the separator(s). As shown, the body is a sinter of polyethylene that has been plasma treated to make it hydrophobic but other materials can be used, as discussed above. The body has a central void 52 to allow electrolyte to be injected quickly into the sensor during manufacture; the electrolyte will over time be absorbed by the body 20 and the separator(s) 11 and 11'. The body has cutouts 54 to accommodate the pins 8 and the associated current collector wires. The shape of the body is such that it fills the whole of the electrolyte reservoir in the sensor.

## Claims

1. A method of manufacturing an electrochemical gas sensor that comprises
a housing,
a sensing electrode and a counter electrode within the housing,
a pair of contact pins each associated with a respective sensing or counter electrode, which pins extend through the housing to provide contacts on the inside and the outside of the housing and
a wire that extends from each electrode to its respective contact pin to provide electrical contact between each electrode and its respective contact pin,
wherein the method comprises:
connecting each wire to its respective contact pin, and
applying a potting compound to isolate the contact pins from the rest of the interior of the housing,
**characterised in that** each wire is held in a groove within the housing while the potting compound is applied, the width of the groove being such that the potting compound is drawn up the groove by capillary action to isolate the end portion of each wire connected to its contact pin.

2. A method as claimed in claim 1, wherein the width of each groove is 0.4 to 1.2 mm.

## Patentansprüche

1. Verfahren zum Herstellen eines elektrochemischen Gassensors mit
einem Gehäuse,
einer Messelektrode und einer Gegenelektrode in dem Gehäuse,
einem Paar von Kontaktstiften, die jeweils zu einer entsprechenden Mess- oder Gegenelektrode gehören, wobei sich die Stifte durch das Gehäuse erstrecken, um Kontakte an der Innenseite und der Außenseite des Gehäuses vorzusehen, und
einem Draht, der sich von jeder Elektrode zu ihrem jeweiligen Kontaktstift erstreckt, um elektrischen Kontakt zwischen jeder Elektrode und ihrem jeweiligen Kontaktstift bereitzustellen,
wobei das Verfahren umfasst:
Verbinden jedes Drahts mit seinem jeweiligen Kontaktstift, und
Aufbringen einer Vergussmasse, um die Kontaktstifte vom Rest des Innenraums des Gehäuses zu isolieren,
**dadurch gekennzeichnet, dass** jeder Draht in einer Nut innerhalb des Gehäuses gehalten wird, während die Vergussmasse aufgebracht wird, wobei die Breite der Nut derart ist, dass die Vergussmasse durch Kapillarwirkung die Nut hinaufgezogen wird, um den Endabschnitt jedes Drahts, der mit seinem Kontaktstift verbunden ist, zu isolieren.

2. Verfahren nach Anspruch 1, wobei die Breite jeder Nut 0,4 bis 1,2 mm beträgt.

## Revendications

1. Procédé de fabrication d'un capteur électrochimique de gaz qui comprend :
un logement,
une électrode de détection et une contre-électrode au sein du logement,
une paire de broches de contact, chacune étant associée à une électrode de détection ou contre-électrode respective, lesdites broches s'étendant à travers le logement pour fournir des contacts à l'intérieur et à l'extérieur du logement, et
un fil électrique qui s'étend à partir de chaque électrode vers sa broche de contact respective pour fournir un contact électrique entre chaque électrode et sa broche de contact respective,
dans lequel le procédé comprend :
la connexion de chaque fil électrique à sa broche de contact respective, et
l'application d'un matériau d'enrobement pour isoler les broches de contact du reste de la partie interne du logement,
**caractérisé en ce que** chaque fil électrique est maintenu dans une rainure au sein du logement tandis que le matériau d'enrobement est appliqué, la largeur de la rainure étant telle que le matériau d'enrobement remonte tout en haut de la rainure par effet capillaire pour isoler la partie terminale de chaque fil électrique connecté à sa broche de contact.

2. Procédé selon la revendication 1, dans lequel la largeur de chaque rainure est de 0,4 mm à 1,2 mm.
